# EUROPEAN PATENT SPECIFICATION

(11) **EP 1 302 357 B1**
(45) Date of publication and mention of the grant of the patent: **01.12.2004**
(21) Application number: 02020976.3
(22) Date of filing: 19.09.2002
(51) Int. Cl.: B60K 31/04

(54) **Method and system for controlling the cruising speed of a vehicle**
Verfahren und Vorrichtung zur Kontrolle der Geschwindigkeit eines Fahrzeugs
Méthode et système pour commander automatiquement la vitesse d'un véhicule à une vitesse de croisière désirée

(30) Priority: 21.09.2001 IT TO20010905
(43) Date of publication of application: 16.04.2003
(73) Proprietor: C.R.F. Società Consortile per Azioni, 10043 Orbassano (Torino) (IT)
(72) Inventor: Campo, Sebastiano, 10043 Orbassano, Torino (IT); Martini, Stefania, 10043 Orbassano, Torino (IT); Murdocco, Vincenzo, 10043 Orbassano, Torino (IT); Lanfranco, Claudio, 10043 Orbassano, Torino (IT)
(74) Representative: Marchitelli, Mauro

(56) References cited:
- EP-A- 0 729 860
- EP-A- 1 113 198
- WO-A-00/14435
- US-A- 5 832 400
- US-A- 6 076 036

## Description

The present invention relates to a method and system for controlling the cruising speed of a motor vehicle, in particular a heavy industrial motor vehicle, of the type indicated in the preamble of Claims 1 and 9.

The systems of the type referred to, known generically by the name of "*cruise control*", enable the driver of a motor vehicle to set a given cruising speed, which is then maintained automatically. For this purpose, the systems of *cruise control* of a traditional type usually comprise:
- a man/machine interface, for example in the form of a display device, to which selection means are associated, to enable the driver to set a desired cruising speed for the motor vehicle; and
- an electronic control system, usually integrated in the so-called engine control unit, which manages operation of the engine of the motor vehicle in order to maintain automatically the cruising speed set.

US-A-6,076,036 showing the features of the preamble of claims 1 and 9 discloses a vehicle cruise control in which an automatic control of speed for a vehicle is based on using speed setting, actual speed, acceleration and the change of the slope of the road to set fuel flow for improved fuel mileage. The solutions provides for a system of sensors and a programmed computer that automatically manages fuel flow to the engine as the vehicle moves in gusting winds and through transitions from one slope of the road to another. The signal to fuel flow depends upon what road slope change and acceleration is detected.

The present invention is based upon recognition of the fact that, above all in the case of heavy industrial vehicles (such as lorries, truck-full-trailers and the like), the maintenance of the cruising speed set manually by the driver lies sometimes at the origin of high fuel-consumption levels and high wear of the main mechanical members of the motor vehicle, in particular those of the braking system.

The purpose of the present invention is thus to provide a *cruise-control* system capable of determining, and recommending to the driver, a driving strategy considered optimal in the perspective of containing fuel consumption and wear of the motor vehicle.

The above and other purposes still, which will emerge more clearly from what follows, are achieved according to the present invention by a method for controlling the cruising speed of a motor vehicle, in particular a heavy industrial motor vehicle, having the characteristics specified in the annexed claim 1, as well as by a motor vehicle comprising a system for controlling the cruising speed thereof having the characteristics specified in the annexed claim 9. integral part of the present description.

Further purposes, characteristics and advantages of the present invention will emerge clearly from the ensuing detailed description and from the annexed drawings, which are provided purely by way of explanatory and non-limiting example and in which:
- Figure 1 is a simplified block diagram of a possible implementation of the control system according to the present invention;
- Figure 2 is a simplified flowchart of the control logic that supervises the system according to the present invention.

The idea underlying the present invention is that of improving the function for controlling the cruising speed of a motor vehicle by means of the identification of a driving strategy or speed of travel considered optimal in function of the altimetric profile of the road.

The said function is achieved, according to the present invention, by means of the processing of two main parameters, represented by the weight of the motor vehicle and by the slope of the road.

In a possible embodiment of the invention, estimation of the weight of the motor vehicle is carried out during the first instants of operation by means of the processing of engine parameters and of signals coming from one or more intelligent control subsystems of the motor vehicle, in particular from the control system for managing the braking system.

The identified value of the weight of the vehicle is then used, on the basis of specific characteristics of the vehicle (engine torque, speed, acceleration, resistance to advance), for estimating the slope of the road.

Once the aforesaid two parameters have been determined, the control logic of the system according to the invention carries out an automatic calculation of the driving strategy considered optimal, which may vary according to the altimetric profile of the road between management of driving speed on the flat, management of uphill driving and management of downhill driving, giving preference to the reduction in fuel consumption for the uphill stretches and to reduction in wear of the brakes for the downhill stretches.

Each of the three strategies referred to is characterized, in particular, for identifying the driving speed and the gear ratio deemed optimal. Said information can be transmitted to the driver by means of a man/machine interface, or else the control system according to the invention will see to modifying automatically, in the event of uphill or downhill driving, the speed previously set manually by the driver, and possibly the gear ratio that the driver had chosen.

It has to be specified that the estimation or detection of the two main parameters underlying the function that forms the subject of the invention, i.e., weight of the vehicle and slope of the road, can be performed using any known technique.

For this purpose, for example, it may be possible to exploit any control subsystems that might already be present on the motor vehicle, such as for example an electronic brake system (EBS), which, where provided, already calculates the information of weight of the motor vehicle and slope of the road for the purposes of optimization of braking efficiency.

In the case where such information is not, instead, already detected directly by other on-board subsystems of the motor vehicle, it can be calculated by implementation of appropriate algorithms of estimation and reconstruction, on the basis of information in any case already available for other purposes (engine r.p.m., engine torque, gear ratio engaged, current speed, specific characteristics of the vehicle).

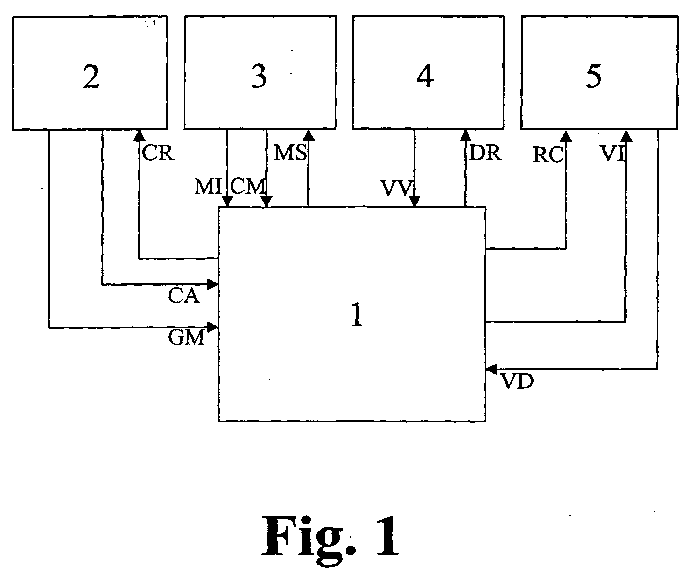

Figure 1 is a schematic representation, by means of a simplified block diagram, of a possible architecture of the control system that forms the subject of the present invention.

In the said figure, the reference number 1 designates, as a whole, the control system of the cruising speed that forms the subject of the present invention, for example provided by an electronic microcontroller, to which there is associated a memory of a non-volatile type containing the program for controlling the *cruise-control* function according to the invention.

The reference number 2 designates, as a whole, an engine control unit, of a type in itself known; the reference number 3 designates a system for managing the automatic gear-change of the motor vehicle, once again of a type in itself known; the number 4 designates a system for managing the braking system of the motor vehicle, once again of a type in itself known; finally, number 5 designates a man/machine interface, which is also of a type essentially known, comprising display means and selection means for setting a desired cruising speed of the motor vehicle.

The various blocks 2-5 are interfaced, according to known modalities, to the control system 1 so as to supply the latter with information regarding certain operating characteristics of the motor vehicle; namely:
- the control unit 2 supplies the system 1 with information representing engine r.p.m. GM and engine torque CA;
- the management system 3 supplies the system 1 with information representing the gear ratio already engaged MI and/or the gear ratio that is being engaged CM;
- the management system 4 supplies the system 1 with the information regarding the current speed VV of the motor vehicle.

Finally, by means of the man/machine interface 5, the control system 1 is supplied with the information regarding the desired travelling speed, set manually by the driver via the said interface 5.

The control logic of the system 1, on the basis of the aforesaid information received from the blocks 2, 3 and 4, determines the weight of the motor vehicle and the altimetric profile of the road, and hence identifies the driving strategy or driving speed considered optimal as a function of the said two parameters.

In the preferred embodiment of the invention, the control system 1 is able to operate according to at least two different modes that can be selected by the driver, i.e., recommended driving and assisted driving. In the case of recommended driving, the system 1 just processes the input data and provides recommendations deemed to be correct for a more appropriate use of the *cruise control*. The driver of the motor vehicle is hence recommended, by means of the man/machine interface 5, at least the driving speed to be set VI, and possibly the gear ratio RC, deemed optimal.

In the case of assisted driving, the system 1 automatically modifies, instead, the speed VD previously set by the driver, by acting directly on the intelligent subsystems of the vehicle, namely:
- on the engine control unit 2, to which the system 1 will indicate the required engine torque CR;
- on the management system 3 for managing the automatic gear-change, to which the system 1 will indicate the gear ratio to be engaged MS; and
- on the management system 4 for managing the braking system, to which the system 1 will indicate the degree of deceleration DR possibly required for the motor vehicle.

Preferably, in the case of assisted-driving mode, the driver will be informed, by means of the man/machine interface 5, at least as regards the optimal speed VI, set automatically by the control system 1 in the aforesaid way.

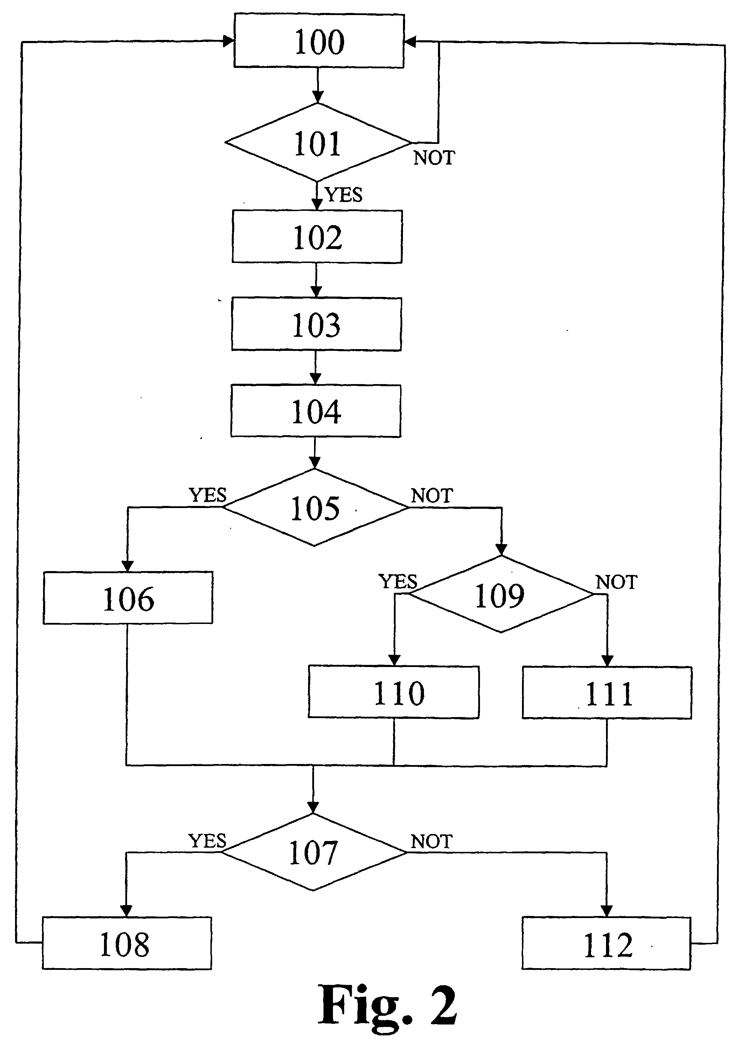

Figure 2 represents a flowchart aimed at providing a schematic illustration of a possible control logic of the system according to the present invention.

In the above figure, the reference number 100 designates the program start-up block, corresponding for example to engine ignition of the motor vehicle. The control is transferred from block 100 to block 101, which is a test block that checks whether the *cruise-control* function has been activated by the driver. If it has not (output NOT), the control returns to block 100, whereas if it has (output YES), the control is transferred to block 102.

Block 102 is the block which represents detection of the aforesaid engine parameters (engine r.p.m. and engine torque), as well as information regarding the gear ratio engaged or that is being engaged, the current speed of the vehicle and the speed of *cruise control* set manually by the user.

The control passes from block 102 to block 103, which represents processing of the parameters and information previously mentioned, aimed at identifying the weight of the motor vehicle.

The control then passes to block 104, which, on the basis of the vehicle weight identified at block 103 and the specific characteristics of the vehicle (engine torque, speed, acceleration, resistance to advance), determines the degree of slope of the road.

The control then passes to block 105, which is a test block, aimed at checking whether the altimetric profile of the road detected at block 104 corresponds to "driving on the flat". If it does not (output NOT), control passes to block 109, whereas if it does (output YES), it passes to block 106, whereby the optimal driving strategy for driving on the flat is determined according to the information on vehicle weight and slope of the road previously determined.

The control then passes to block 107, which is a test block, which checks whether the system of *cruise control* has been activated in recommended-driving mode. If it has (output YES), the control passes to block 108, by means of which there is controlled the display, on the man/machine interface of the system, of the recommended speed to be set for the *cruise-control* system, as well as the gear ratio to be engaged. The control then returns to the initial block 100.

If the system of *cruise control* has not been activated in recommended-driving mode (output NOT from block 107), a circumstance which indicates the fact that the system has been activated in assisted-driving mode, the control passes to block 112, by means of which the system automatically modifies the speed and/or the gear ratio previously set by the driver, by acting directly on the various intelligent subsystems of the motor vehicle, as previously explained. The control then returns to the initial block 100.

Block 109 is a test block, which receives control from block 105 in the case where the altimetric profile of the road detected does not correspond to "driving on the flat". The said block 109 is a test block, which in turn detects whether the altimetric profile of the road corresponds to "uphill driving".

If it does correspond (output YES), control is transferred to block 110, whereby the optimal driving strategy for uphill driving is determined, according to the information on vehicle weight and slope of the road previously determined. The control then passes to block 107 and from the latter to block 108 or 112, as previously described.

If it does not correspond (output NOT from block 109), which is a circumstance indicating the fact that the profile of the road corresponds to "downhill driving", control is instead transferred to block 111, whereby the optimal strategy for downhill driving is determined according to of the information on vehicle weight and slope of the road previously determined. The control then passes to block 107 and from there to block 108 or block 112, as described previously.

Of course, the simplified control logic that has been described with reference to Figure 2 is to be understood as having been provided purely by way of non-limiting example, and it is clear that, in the practical implementation of the invention, the control logic may, if so required, be of a much more sophisticated type.

It remains to be clarified that, in general terms, the control logic that presides over operation of the control system which forms the subject of the present invention can be implemented directly within the engine control unit itself or in any other electronic control subsystem of the motor vehicle.

From the description presented above, there emerge clearly the characteristics of the method and system for controlling the cruising speed of a motor vehicle, in particular a heavy industrial motor vehicle, as provided according to the present invention, the said characteristics being detailed in the annexed claims.

From the foregoing description, there likewise emerge clearly the advantages of the invention, which are principally represented by the fact that the method and the system described enable, in a simple and inexpensive way, improvement of the function of traditional *cruise control,* by means of the identification of a driving strategy or driving speed considered optimal according to the altimetric profile of the road, in the perspective of reducing fuel consumption and wear of the main mechanical members of the motor vehicle.

Finally, it is clear that numerous variations are possible, for the person skilled in the branch, to the method and system described purely by way of example herein, without thereby departing from the spheres of novelty inherent in the inventive idea.

There may, for example, be mentioned the possibility of exploiting additional information, which may possibly already be available on the motor vehicle, as input to the control system according to the invention, in order to improve the reconstruction of the profile of the road and thus increase further the performance of the *cruise-control* system. By way of example, said additional information (uphill driving, downhill driving, presence of bends, state of road surface, environmental conditions, etc.) may be made available by a system of satellite navigation or by means of automatic road-signalling systems.

For the purposes of determination of the weight of the motor vehicle, it is of course possible to exploit the possible presence on the latter of a system for detecting (measuring and/or calculating) the slope in active suspensions.

Another possible variant consists in envisaging, in the control logic of the system, a step of storage (in suitable non-volatile read/write memory means, such as an EEPROM-type memory) of the altimetric profile of the road detected at the moment of a short or long stop of the motor vehicle, the aim being to render the response of the system according to the invention faster in the case where travel of the motor vehicle is stopped for a more or less long period of time.

The invention may also be applied to systems of adaptive cruise control, of a type in itself known, where the set speed is modified automatically following upon detection of the approach to another vehicle travelling in front by a radar detector or the like mounted on board the vehicle.

## Claims

1. A method for controlling the cruising speed of a motor vehicle, in particular a heavy industrial motor vehicle, the method comprising the step of:
- setting a desired cruising speed for the motor vehicle,
- managing the longitudinal motion of the motor vehicle in order to reach and/or maintain the desired cruising speed automatically,
- detecting or estimating the slope or altimetric profile of the road on which the motor vehicle is travelling,
the method being **characterized by** further comprising
- detecting or estimating the weight of the motor vehicle,
- determining, in function of the detected or estimated slope of the road and weight of the motor vehicle, a driving strategy from among a flat driving strategy, a uphill driving strategy and a downhill driving strategy, each of said strategy including determination, in function of said detected or estimated slope and weight, of a cruising speed and a gear ratio considered optimal, giving preference to reduction of fuel consumption for uphill driving and reduction of wear of the motor vehicle's braking system for downhill driving.

2. The method according to Claim 1, wherein the detection or estimation of the slope of the road is carried out on the basis of the detected or estimated weight of the motor vehicle.

3. The method according to Claim 1 or 2, wherein the detection or estimation of the weight of the motor vehicle is carried out during the first instants of operation of the latter, in particular by means of processing of engine parameters and/or of signals coming from a control subsystem of the motor vehicle.

4. The method according to Claim 1 or 2, wherein the slope of the road is estimated on the basis of the detected or estimated weight of the motor vehicle and on the basis of one or more of the following specific characteristics of the motor vehicle: engine torque, speed, acceleration, resistance to advance.

5. The method according to Claim 1, further comprising signalling to the driver of the motor vehicle the cruising speed and the gear ratio considered optimal.

6. The method according to Claim 1, further comprising the automatic setting of the cruising speed and the gear ratio considered optimal.

7. The method according to Claim 1, wherein the detection or estimation of the slope of the road is at least in part obtained by means of a system selected from among a system of satellite navigation, a system for brake control, a system for active suspension control.

8. The method according to Claim 1, further comprising the storage of the slope of the road detected or estimated at the moment of a stop of the motor vehicle.

9. A motor vehicle, in particular a heavy industrial motor vehicle, having a system for controlling the cruising speed thereof, comprising:
- means (5) for setting a desired cruising speed for the motor vehicle,
- means (1, 4) for managing the longitudinal motion of the motor vehicle, in order to reach and/or maintain the desired cruising speed automatically,
- means (1, 2, 3, 4,5) for detecting or estimating the altimetric profile of the road on which the motor vehicle is travelling,
**characterized in that** said system further comprises:
- means (2, 3, 4) for detecting or estimating the weight of the motor vehicle,
- processing means (1) for determining, in function of the detected or estimated altimetric profile of the road and weight of the motor vehicle, a driving strategy from among a flat driving strategy, a uphill driving strategy and a downhill driving strategy, the processing means (1) comprising means for identifying, for each of said strategy and in function of said detected or estimated altimetric profile and weight, a cruising speed and a gear ratio considered optimal, giving preference to reduction of fuel consumption for uphill driving and reduction of wear of the motor vehicle's braking system for downhill driving.

10. The motor vehicle according to Claim 9, **characterized in that** said system further comprises means for the selection of a type of operation thereof from among at least:
- a first mode, in which said processing means (1) are operative for signalling, on a man/machine interface (5), the cruising speed and the gear ratio considered optimal; and
- a second mode, in which said processing means (1) are operative for automatically setting the cruising speed and the gear ratio considered optimal.

11. The motor vehicle according to Claim 9 or 10, **characterized in that** said system is integrated in an engine control unit.

12. The motor vehicle according to Claim 9 or 10, **characterized in that** said system is interfaced to at least one from among the following electronic control subsystems of the motor vehicle:
- an engine control unit (2);
- a control system for managing an automatic gear-change (3); and
- a control system for managing a braking system (4).

13. The motor vehicle according to Claim 9, **characterized in that** said control system is of the adaptive type, designed to modify the set speed following the detection of a vehicle travelling ahead by an on-board sensing device.

## Patentansprüche

1. Verfahren zur Kontrolle der Fahrgeschwindigkeit eines Kraftfahrzeuges, insbesondere eines schweren gewerblichen Kraftfahrzeuges,
wobei das Verfahren die Schritte aufweist:
- Einstellen einer gewünschten Fahrgeschwindigkeit für das Kraftfahrzeug,
- Handhaben der Längsbewegung des Kraftfahrzeuges, um die gewünschte Fahrgeschwindigkeit selbsttätig zu erreichen und/oder beizubehalten,
- Ermitteln oder Abschätzen der Neigung oder des höhenmäßigen Profils der Straße, auf der das Kraftfahrzeug fährt,
wobei das Verfahren **dadurch gekennzeichnet ist, dass** es außerdem umfaßt
- das Ermitteln oder Abschätzen des Gewichtes des Kraftfahrzeuges,
- Festlegen, als Funktion der ermittelten oder abgeschätzten Neigung der Straße und des Gewichtes des Kraftfahrzeuges, einer Fahrstrategie aus einer Strategie für ebenes Fahren, einer Strategie für Bergauffahrt und einer Strategie für Bergabfahrt, wobei jede der genannten Strategien die Ermittlung einer Fahrgeschwindigkeit und eines als optimal betrachteten Getriebeganges als Funktion der genannten ermittelten oder abgeschätzten Neigung und des Gewichtes beinhaltet, wobei für Bergauffahrt der Verringerung des Kraftstoffverbrauchs Vorrang gegeben wird und für Bergabfahrt der Verringerung des Verschleißes des Bremssystemes des Kraftfahrzeuges Vorrang gegeben wird.

2. Verfahren nach Anspruch 1, bei dem die Ermittlung oder Abschätzung der Neigung der Straße auf der Grundlage des ermittelten oder abgeschätzten Gewichtes des Kraftfahrzeuges durchgeführt wird.

3. Verfahren nach Anspruch 1 oder 2, bei dem die Ermittlung oder Abschätzung des Gewichtes des Kraftfahrzeuges während der ersten Zeitpunkte des Betriebs des letzteren durchgeführt wird, insbesondere durch Verarbeitung von Motorparametern und/oder von Signalen, die von einem Steuer-Subsystem des Kraftfahrzeuges stammen.

4. Verfahren nach Anspruch 1 oder 2, bei dem die Neigung der Straße auf der Grundlage des ermittelten oder abgeschätzten Gewichtes des Kraftfahrzeuges und auf Grundlage eines oder mehrerer der nachfolgenden speziellen Charakteristiken des Kraftfahrzeuges abgeschätzt wird: Motordrehmoment, Geschwindigkeit, Beschleunigung, Fahrwiderstand.

5. Verfahren nach Anspruch 1, außerdem umfassend, dass der Fahrer des Kraftfahrzeuges über die Fahrgeschwindigkeit und den Getriebegang in Kenntnis gesetzt wird, die als optimal anzusehen sind.

6. Verfahren nach Anspruch 1, außerdem das automatische Einstellen der Fahrgeschwindigkeit und des Getriebeganges umfassend, die als optimal anzusehen sind.

7. Verfahren nach Anspruch 1, bei dem die Ermittlung oder Abschätzung der Neigung der Straße zumindest teilweise mittels eines Systems erhalten wird, das ausgewählt ist und einem System der Satellitennavigation, einem System zur Bremsensteuerung, einem System für aktive Aufhängungssteuerung.

8. Verfahren nach Anspruch 1, außerdem das Speichern der ermittelten oder abschätzten Neigung der Straße während eines Zeitpunktes eines Anhaltens des Kraftfahrzeuges umfassend.

9. Kraftfahrzeug, insbesondere schweres gewerbliches Kraftfahrzeug, mit einem System zur Kontrolle von dessen Fahrgeschwindigkeit, umfassend:
- ein Mittel (5) zum Einstellen einer gewünschten Fahrgeschwindigkeit für das Fahrzeug,
- ein Mittel (1, 4) zur Handhabung der Längsbewegung des Kraftfahrzeuges, um die gewünschte Fahrgeschwindigkeit automatisch zu erreichen und/oder beizubehalten,
- ein Mittel (1, 2, 3, 4, 5) zum Ermitteln oder Abschätzen des höhenmäßigen Profils der Straße, auf der das Kraftfahrzeug fährt, **dadurch gekennzeichnet, dass** das genannte System ferner umfaßt:
- ein Mittel (2, 3, 4) zum Ermitteln oder Abschätzen des Gewichtes des Kraftfahrzeuges,
- ein Verarbeitungsmittel (1), um als Funktion des ermittelten oder abgeschätzten höhenmäßigen Profils der Straße und des Gewichtes des Kraftfahrzeuges eine Fahrstrategie zu ermitteln, aus einer Strategie für ebenes Fahren, einer Strategie für Bergauffahrt und einer Strategie für Bergabfahrt, wobei das Verarbeitungsmittel (1) ein Mittel umfaßt, um für jede genannte Strategie und in Abhängigkeit von dem ermittelten oder abgeschätzten höhenmäßigen Profil und dem Gewicht eine Fahrgeschwindigkeit und einen Getriebegang zu identifizieren, die als optimal erachtet sind, wobei für Bergauffahrt der Verringerung des Kraftstoffverbrauches und für Bergabfahrt der Verringerung des Verschleißes des Bremssystemes des Kraftfahrzeuges Vorrang gegeben wird.

10. Kraftfahrzeug nach Anspruch 9, **dadurch gekennzeichnet, dass** das genannte System außerdem ein Mittel für die Auswahl einer Betriebsart desselben aus zumindest Folgendem umfaßt:
- einer ersten Betriebsart, in der das genannte Verarbeitungsmittel (1) wirksam ist, um einer Mensch/Maschine-Schnittstelle (5) die Fahrgeschwindigkeit und den Getriebegang zu signalisieren, die als optimal betrachtet werden, und
- einer zweiten Betriebsart, in der das genannte Verarbeitungsmittel (1) wirksam ist, um automatisch die Fahrgeschwindigkeit und den Getriebegang einzustellen, die als optimal betrachtet werden.

11. Kraftfahrzeug nach Anspruch 9 oder 10, **dadurch gekennzeichnet, dass** das genante System in eine Motorsteuereinheit integriert ist.

12. Kraftfahrzeug nach Anspruch 9 oder 10, **dadurch gekennzeichnet, dass** das genannte System in Schnittstellenbeziehung zu zumindest einem der folgenden elektronischen Steuer-Subsysteme des Kraftfahrzeuges steht:
- einer Motorsteuereinheit (2);
- einem Steuersystem für das Durchführen eines automatischen Gangwechsels (3); und
- einem Steuersystem zur Handhabung eines Bremssystems (4).

13. Kraftfahrzeug nach Anspruch 9, **dadurch gekennzeichnet, dass** das genannte Steuersystem vom adaptiven Typ ist, dazu ausgelegt, um die eingestellte Geschwindigkeit aufgrund dessen zu modifizieren, dass durch eine an Bord befindliche Sensorvorrichtung ermittelt wird, dass ein vorausfahrendes Fahrzeug vorhanden ist.

## Revendications

1. Procédé de commande de la vitesse de croisière d'un véhicule motorisé, en particulier un véhicule motorisé industriel lourd, le procédé comprenant les étapes consistant à :
- établir une vitesse de croisière souhaitée pour le véhicule motorisé,
- gérer le déplacement longitudinal du véhicule motorisé afin d'atteindre et/ou de maintenir la vitesse de croisière souhaitée automatiquement,
- détecter ou estimer l'inclinaison ou le profil altimétrique de la route sur laquelle le véhicule motorisé roule,
le procédé étant **caractérisé en ce qu'**il comprend en outre
- la détection ou l'estimation du poids du véhicule motorisé,
- la détermination, en fonction de l'inclinaison de la route et du poids du véhicule motorisé détectés ou estimés, une stratégie de conduite parmi une stratégie de conduite à plat, une stratégie de conduite en montée et une stratégie de conduite en descente, chacune desdites stratégies comprenant la détermination, en fonction de ladite inclinaison et dudit poids détectés ou estimés, d'une vitesse de croisière et d'un rapport de vitesse considérés optimaux, donnant la préférence à la réduction de la consommation de carburant pour la conduite en montée et à la réduction de l'usure du système de freinage du véhicule motorisé pour la conduite en descente.

2. Procédé selon la revendication 1, dans lequel la détection ou l'estimation de l'inclinaison de la route est effectuée sur la base du poids détecté ou estimé du véhicule motorisé.

3. Procédé selon la revendication 1 ou 2, dans lequel la détection ou l'estimation du poids du véhicule motorisé est effectué pendant les premiers instants de fonctionnement de ce dernier, en particulier à l'aide du traitement des paramètres du moteur et/ou des signaux provenant d'un sous-système de commande du véhicule motorisé.

4. Procédé selon la revendication 1 ou 2, dans lequel l'inclinaison de la route est estimée sur la base du poids détecté ou estimé du véhicule motorisé et sur la base d'une ou plusieurs caractéristiques suivantes du véhicule motorisé : couple moteur, vitesse, accélération, résistance à l'avance.

5. Procédé selon la revendication 1, comprenant en outre l'indication au conducteur du véhicule motorisé de la vitesse de croisière et du rapport de vitesse considérés optimaux.

6. Procédé selon la revendication 1, comprenant en outre l'établissement automatique de la vitesse de croisière et du rapport de vitesse considérés optimaux.

7. Procédé selon la revendication 1, dans lequel la détection ou l'estimation de l'inclinaison de la route est au moins en partie obtenue à l'aide d'un système sélectionné parmi un système de navigation par satellite, un système de commande des freins, un système de commande de suspension active.

8. Procédé selon la revendication 1, comprenant en outre la mise en mémoire de l'inclinaison de la route détectée ou estimée au moment d'un arrêt du véhicule motorisé.

9. Véhicule motorisé, en particulier un véhicule motorisé industriel lourd, ayant un système destiné à commander la vitesse de croisière de celui-ci, comprenant :
- un moyen (5) destiné à établir une vitesse de croisière pour le véhicule motorisé,
- des moyens (1, 4) destinés à gérer le déplacement longitudinal du véhicule motorisé, afin d'atteindre et/ou de maintenir la vitesse de croisière souhaitée automatiquement,
- des moyens (1, 2, 3, 4, 5) destinés à détecter ou estimer le profil altimétrique de la route sur laquelle le véhicule motorisé roule,
**caractérisé en ce que** ledit système comprend en outre :
- des moyens (2, 3, 4) destinés à détecter ou estimer le poids du véhicule motorisé,
- un moyen de traitement (1) destiné à déterminer, en fonction du profil altimétrique de la route et du poids du véhicule motorisé détectés ou estimés, une stratégie de conduite parmi une stratégie de conduite à plat, une stratégie de conduite en montée et une stratégie de conduite en descente, le moyen de traitement (1) comprenant un moyen destiné à identifier, pour chacune desdites stratégies et en fonction dudit profil altimétrique et dudit poids détectés ou estimés, une vitesse de croisière et un rapport de vitesse considérés optimaux, donnant la préférence à la réduction de la consommation de carburant pour la conduite en montée et à la réduction de l'usure du système de freinage du véhicule motorisé pour la conduite en descente.

10. Véhicule motorisé selon la revendication 9, **caractérisé en ce que** ledit système comprend en outre un moyen destiné à sélectionné un type de fonctionnement de celui-ci parmi au moins :
- un premier mode, dans lequel ledit moyen de traitement (1) fonctionne pour indiquer, sur une interface homme / machine (5), la vitesse de croisière et le rapport de vitesse considérés optimaux ; et
- un second mode, dans lequel ledit moyen de traitement (1) fonctionne pour établir automatiquement la vitesse de croisière et le rapport de vitesse considérés optimaux.

11. Véhicule motorisé selon la revendication 9 ou 10, **caractérisé en ce que** ledit système est intégré dans une unité de commande de moteur.

12. Véhicule motorisé selon la revendication 9 ou 10, **caractérisé en ce que** ledit système est interfacé sur au moins un sous-système parmi les sous-systèmes de commande électronique suivants du véhicule motorisé :
- une unité de commande de moteur (2) ;
- un système de commande destiné à gérer un changement de vitesse automatique (3) ; et
- un système de commande destiné à gérer un système de freinage (4).

13. Véhicule motorisé selon la revendication 9, **caractérisé en ce que** ledit système de commande est du type adaptatif, conçu pour modifier la vitesse établie suivant la détection d'un véhicule qui avance par un dispositif de détection à bord.
